# FASCICULE DE BREVET EUROPEEN

(11) **EP 1 288 579 B1**
(45) Date de publication et mention de la délivrance du brevet: **20.02.2008**
(21) Numéro de dépôt: 02292032.6
(22) Date de dépôt: 13.08.2002
(51) Int. Cl.: F23R 3/50, F23R 3/34

(54) **Chambre de combustion annulaire à double tête étagée**
Gestufte zweiköpfige Ringbrennkammer
Stepped double head annular combustor

(30) Priorité: 28.08.2001 FR 0111190
(43) Date de publication de la demande: 05.03.2003
(73) Titulaire: SNECMA, 75015 Paris (FR)
(72) Inventeur: Boudoin, Christophe, 77170 Brie-Comte-Robert (FR); Commaret, Patrice, 77950 Rubelles (FR); Le Letty, Eric, 91700 Sainte Geneviève-des-Bois (FR); Viguier, Christophe, 94140 Alfortville (FR)
(74) Mandataire: Joly, Jean-Jacques

(56) Documents cités:
- EP-A- 0 488 557
- DE-A- 19 720 402
- FR-A- 2 727 193
- US-A- 5 285 635

## Description

### Arrière-plan de l'invention

La présente invention se rapporte au domaine des chambres de combustion annulaires à double tête étagée pour une turbine à gaz d'un moteur d'avion. Elle vise plus particulièrement l'agencement des systèmes d'injection de carburant équipant de telles chambres de combustion.

Une chambre de combustion pour une turbine à gaz est formée de façon connue de parois longitudinales annulaires interne et externe réunies par un fond de chambre. C'est dans cette chambre qu'ont lieu les réactions de combustion, et celle-ci est configurée pour que le débit d'air reçu se partage en au moins trois fractions ; l'air de combustion, l'air de dilution et l'air nécessaire au refroidissement de ses parois qui ne participe pas directement aux phénomènes de combustion. La chambre comprend ainsi une zone primaire ou zone de combustion et une zone secondaire dite de dilution située en aval de la précédente.

Le carburant est fourni à la chambre de combustion par des injecteurs de carburant disposés dans des trous traversant le fond de chambre. L'air destiné à la zone de combustion est introduit dans la chambre, en partie par son fond et éventuellement par les injecteurs, et en partie par des orifices transversaux percés dans ses parois longitudinales. L'introduction de l'air de dilution se fait en général plus en aval dans la chambre de combustion par une ou plusieurs rangées de trous également répartis sur les parois de la chambre.

De par leur conception, les chambres de combustion actuellement utilisées permettent difficilement de minimiser les émissions polluantes issues de la combustion, notamment les émissions d'oxydes d'azote, de monoxyde de carbone et d'hydrocarbures imbrûlés.

Afin de résoudre ce problème, il est connu d'utiliser des chambres de combustion à double tête étagée, c'est-à-dire des chambres dont les injecteurs de carburant sont répartis sur une tête dite « pilote » et sur une tête dite «décollage» espacée de la précédente à la fois radialement et axialement, la tête décollage étant située en aval de la tête pilote dans le sens d'écoulement gazeux dans la chambre.

Classiquement, les « injecteurs pilotes » assurent l'allumage et les phases de ralenti du moteur et les « injecteurs de décollage » interviennent dans les phases de « plein gaz » (PG), notamment au décollage, et dans les phases de croisière. En général, les injecteurs pilotes sont alimentés en carburant en permanence tandis que les injecteurs de décollage ne sont alimentés qu'au-delà d'un régime minimum déterminé.

Ainsi, on connaît par exemple le document FR 2 727 193 qui divulgue une chambre de combustion annulaire dont les injecteurs sont répartis sur une tête pilote et une tête décollage. La tête pilote est équipée de n injecteurs de perméabilité P1 adaptés au régime de ralenti. La tête décollage est également équipée de n injecteurs de perméabilité P1 permettant l'allumage de la tête décollage à faible régime, et de n injecteurs de décollage de perméabilité P2 > P1 adaptés au régime pleine charge (par perméabilité de n injecteurs, on entend le débit d'air global traversant l'ensemble des n injecteurs).

La perméabilité P1 des n injecteurs pilotes est comprise entre 10 % et 12 % du débit d'air total qui entre dans la chambre de combustion. Compte-tenu de la perte de charge de l'air due au contournement de la tête pilote pour parvenir à la tête décollage, la même perméabilité P1 des n premiers injecteurs de décollage correspond alors à environ 8 % à 10 % du débit d'air total entrant. Par contre, la perméabilité P2 des n seconds injecteurs de décollage est de 26 % à 35 % de ce débit d'air total.

Une telle disposition favorise la commutation entre le régime de ralenti, avec seuls les n injecteurs pilotes alimentés, et un régime de combustion sectorisée, ou "sector burning" (SB) dans lequel, parmi les injecteurs de décollage, seuls les n injecteurs de décollage de perméabilité P1 sont allumés.

Par contre, du fait de la différence importante entre la perméabilité P2 et la perméabilité P1 des injecteurs de décollage, la commutation suivante entre les régimes SB et PG est plus difficile. Elle ne peut être réalisée qu'avec une richesse d'alimentation relativement élevée, donc un régime moteur élevé (il est indiqué dans le document FR 2 727 193 que l'allumage des n injecteurs de décollage de perméabilité P2 intervient lorsque la vitesse de rotation du compresseur haute pression atteint 70 % de la vitesse nominale à plein régime).

Or, un fonctionnement prolongé en régime SB présente des inconvénients : la répartition de température pour les aubes de turbine haute pression n'est pas optimale, et l'alternance en tête décollage d'un injecteur allumé et d'un injecteur éteint favorise le figeage des réactions chimiques, ce qui affecte le rendement de combustion et favorise les émissions indésirables de particules et d'imbrûlés.

### Objet et résumé de l'invention

La présente invention vise à pallier de tels inconvénients en proposant une chambre de combustion annulaire à double tête étagée qui autorise une plage de fonctionnement sensiblement étendue par rapport aux technologies classiques de foyers simple et double tête, tout en assurant une bonne maîtrise des profils de température et en réduisant les émissions polluantes.

A cet effet, il est prévu une chambre de combustion annulaire étagée de turbine à gaz d'un moteur d'avion, comprenant une tête pilote comportant plusieurs systèmes d'injection répartis sur un fond de chambre de tête pilote reliant une paroi longitudinale interne de la chambre à une paroi longitudinale externe de la tête pilote, et une tête décollage radialement et axialement décalée de la tête pilote comportant plusieurs systèmes d'injection répartis sur un fond de chambre de tête décollage reliant la paroi longitudinale externe de la tête pilote à une paroi longitudinale externe de la tête décollage, la tête pilote comportant au moins N systèmes d'injection sensiblement identiques de perméabilité globale PA, adaptés à l'allumage et aux régimes voisins du ralenti, la tête décollage comportant au moins 2N systèmes d'injection sensiblement identiques de perméabilité globale PB, PB étant supérieure ou égale à PA, la chambre étant caractérisée en ce que la perméabilité PA est comprise entre 10 % et 40 % du débit d'air total qui entre dans la chambre et la perméabilité PB est comprise entre 30 % et 70 % du débit d'air total qui entre dans la chambre.

L'utilisation, pour la tête décollage, de 2N systèmes d'injection ayant même perméabilité individuelle permet d'assurer dans de bonnes conditions à la fois la commutation entre les régimes ralenti et SB, et la commutation entre régimes SB et PG, cette dernière commutation pouvant être réalisée à un régime bas, même proche du ralenti.

Seion des dispositions avantageuses, la perméabilité PA est comprise entre 17 % et 21 % du débit d'air total qui entre dans la chambre de combustion, et la perméabilité PB est comprise entre 36 % et 45 % du même débit d'air.

La paroi longitudinale externe de la tête décollage et éventuellement la paroi longitudinale externe de la tête pilote, ainsi que la paroi interne comportent avantageusement des rangées d'orifices de dilution. Le débit d'air entrant par ces orifices de dilution est compris entre 4 % et 10 %, de préférence entre 6 % et 8 %, du débit d'air total entrant dans la chambre pour les orifices externes de la ou des parois longitudinales externes, et entre 2 % et 8 %, de préférence entre 4 % et 6 %, pour les orifices internes formés dans la paroi interne.

Les axes des systèmes d'injection des têtes pilote et décollage sont avantageusement dirigés vers une même zone annulaire d'évacuation des gaz issus de la combustion.

Les systèmes d'injection des têtes pilote et décollage sont installés sur des fonds de chambre qui peuvent être perpendiculaires à l'axe moteur ou avoir une forme conique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en demi-coupe axiale très schématique d'une chambre de combustion selon un mode de réalisation de l'invention ;
- la figure 2 est une vue partielle très schématique montrant un exemple de répartition des systèmes d'injection sur les fonds de chambre des têtes pilote et décollage ;
- la figure 3 est une vue en coupe montrant un mode particulier de réalisation de l'invention d'un système d'injection.

### Description détaillée d'un mode de réalisation

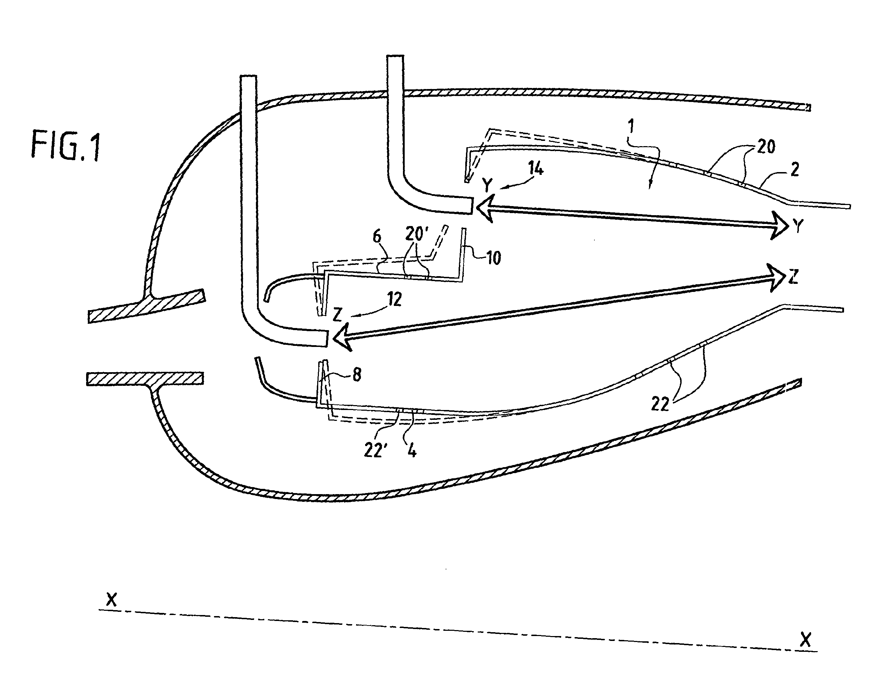

un se réfère d'abord à la figure 1 qui représente schématiquement en demi-coupe axiale une chambre de combustion 1 selon un mode de réalisation de l'invention. L'axe référencé X-X correspond à l'axe du moteur équipé d'une telle chambre de combustion.

La chambre de combustion 1 est de type annulaire avec une tête pilote 12 et une tête décollage 14 décalée de la précédente à la fois radialement et axialement, la tête décollage étant située en aval de la tête pilote dans le sens d'écoulement gazeux dans la chambre. Cette dernière est notamment formée d'une paroi longitudinale externe 2 de la tête de décollage, d'une paroi longitudinale interne 4 et d'une paroi longitudinale externe 6 de la tête pilote. Un fond de chambre 8 transversal de la tête pilote réunit la paroi externe 6 de la tête pilote et la paroi interne 4, et les parois externe 2 de la tête décollage et externe 6 de la tête pilote sont réunies par un fond de chambre 10 de tête décollage, également transversal.

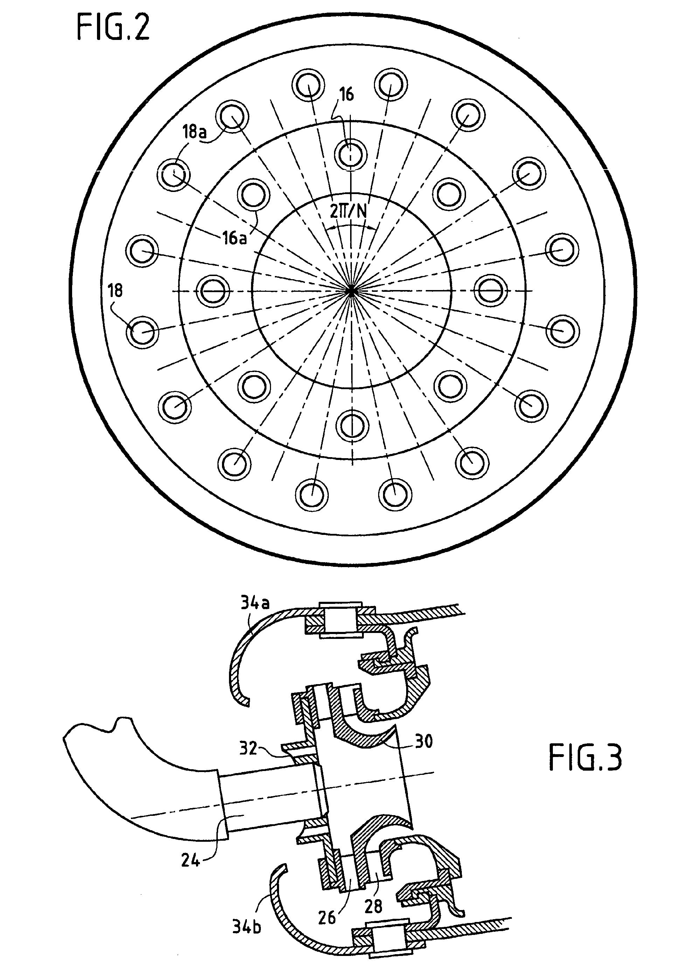

Comme le montre la figure 2, des systèmes d'injection de carburant 16, 18 sont disposés dans des trous 16a et 18a traversant respectivement les fonds de chambre 8 et 10 des têtes pilote et décollage. Plus précisément, la tête pilote 12 est équipée de N systèmes d'injection de carburant 16 sensiblement identiques répartis de façon régulière autour de l'axe X-X, tandis que la tête décollage 14 comprend 2N systèmes d'injection 18 sensiblement identiques, également répartis de façon régulière autour de l'axe X-X.

Ainsi, dans un secteur angulaire de chambre correspondant à 2π/N, se trouvent deux systèmes d'injection 18 de la tête décollage pour un seul système d'injection 16 de la tête pilote. Les systèmes d'injection sont avantageusement disposés sensiblement « en quinconce ». Par disposition en quinconce, on entend que dans un secteur angulaire de 2π/N, la position angulaire du système d'injection 16 de la tête pilote est située sensiblement à égale distance des positions angulaires des deux systèmes d'injection 18 de la tête décollage.

Les têtes pilote 12 et décollage 14 peuvent être équipées de tout type connu de systèmes d'injection qui assurent soit la pulvérisation du carburant de façon mécanique, aérodynamique ou pré-mélangée, soit sa vaporisation. Un mode particulier de réalisation d'un système d'injection est décrit plus loin en référence à la figure 3.

Les N systèmes d'injection de la tête pilote 12 ont une perméabilité globale PA et les 2N systèmes d'injection de la tête décollage 14 ont une perméabilité globale PB, PB étant supérieure ou égale à PA. Avantageusement, 2PA ≤ PB ≤ 3PA et, de préférence, 2,5PA ≤ PB ≤3PA.

Par perméabilités globales PA et PB, on entend les débits d'air traversant respectivement l'ensemble des N systèmes d'injection de la tête pilote et l'ensemble des 2N systèmes d'injection de la tête décollage, c'est-à-dire que PA = Npa, où pa est la perméabilité individuelle de chaque système d'injection de la tête pilote et PB = 2Npb où pb est la perméabilité de chaque système d'injection de la tête décollage. Ces perméabilités seront exprimées ici en pourcentages du débit d'air total qui entre dans la chambre de combustion.

La perméabilité PA est comprise entre 10 % et 40 %, et de préférence entre 17 % et 21 %, du débit d'air total qui entre dans la chambre de combustion, et la perméabilité PB est comprise entre 30 % et 70 %, et de préférence entre 36 % et 45 %, du même débit d'air.

Comme connu en soi, la paroi longitudinale 2 de la tête décollage et la paroi interne 4 pourront chacune être percées d'au moins une rangée d'orifices de dilution dont le diamètre est ajusté en fonction des performances à satisfaire. Ces orifices de dilution permettent d'alimenter la chambre de combustion en air nécessaire à la dilution des gaz de combustion.

Les orifices de dilution sont de préférence répartis de la façon suivante :
- la paroi longitudinale externe 2 de la tête décollage comporte au moins une rangée de 2N orifices de dilution externes 20 par exemple identiques qui débouchent dans la chambre de combustion 1 de façon sensiblement perpendiculaire à la paroi, en aval de la tête décollage, et sont répartis angulairement de façon régulière autour de l'axe X-X ;
- la paroi interne 4 comporte au moins une rangée de 2N orifices de dilution internes 22 qui débouchent dans la chambre de combustion de façon sensiblement normale à la paroi et sont répartis angulairement de façon régulière autour de l'axe X-X.

Les 2N trous de dilution 22 pourront être répartis en N premiers trous identiques occupant mêmes positions angulaires qu'un système d'injection 18 sur deux et N seconds trous identiques occupant mêmes positions angulaires que les systèmes d'injection 18 restants, les premiers trous de dilution pouvant ou non être identiques aux seconds.

La paroi longitudinale externe 6 de la tête pilote pourra aussi être munie d'orifices de dilution externes 20', des orifices de dilution internes supplémentaires 22' pouvant alors être prévus dans la paroi interne 4, sensiblement au même niveau de la chambre, en regard des orifices 22'.

A titre indicatif, la part du débit d'air qui entre dans la chambre de combustion par ces orifices de dilution peut être comprise entre 4 % et 10 %, et de préférence entre 6 % et 8 %, du débit total pour les orifices 20 situés sur la paroi longitudinale externe 2 de la tête décollage (et éventuellement ceux 20' situés sur la paroi longitudinale externe 6), et entre 2 % et 8 %, et de préférence entre 4 % et 6 %, du même débit pour les orifices situés sur la paroi interne 4.

Le débit d'air restant est destiné au refroidissement des parois longitudinales et des fonds de chambre. A cet effet, les parois longitudinales 2, 4 et 6 de la chambre sont refroidies classiquement par multiperforation de ces parois ou par des dispositifs à films ou à tuiles équipant ces mêmes parois.

De plus, si l'allumage de la chambre est réalisé par un dispositif conventionnel (non représenté) du type bougie à air ou à semiconducteur, celui-ci peut être par exemple placé au niveau de l'axe d'un système d'injection 16 de la tête pilote 12.

Avantageusement, les fonds de chambre 8, 10 et les systèmes d'injection 16, 18 les traversant sont disposés de façon à ce que les axes des systèmes d'injection soient dirigés vers une même zone annulaire d'évacuation des gaz issus de la combustion. Pour ce faire, la figure 1 illustre deux exemples de disposition des fonds de chambre et de leurs systèmes d'injection respectifs : en traits pleins, les fonds de chambre 8 et 10 sont sensiblement perpendiculaires à l'axe moteur X-X, et en traits pointillés, ils sont de formes sensiblement tronconiques. Dans le premier cas, les axes Y, Z des systèmes d'injection 16, 18 peuvent être inclinés par rapport à la normale aux fonds de chambre 8 et 10 et, dans le deuxième cas, perpendiculaires aux fonds de chambre.

Ces dispositions permettent de réduire autant que possible le volume global de la chambre de combustion et d'améliorer les performances en termes de température, de rendement de combustion et de réduction d'émissions polluantes. La convergence des axes des systèmes d'injection permet d'augmenter la rapidité de mélange et de combustion du carburant dans la chambre et de favoriser par conséquent une combustion complète du carburant dans un volume réduit. Comme la production d'oxydes d'azote est fonction du temps de séjour des gaz chauds issus de la combustion dans la chambre, la rapidité de combustion permet alors de diminuer de façon significative ces émissions polluantes.

La figure 3 montre un mode de réalisation d'un système d'injection. Celui-ci comporte un injecteur 24 alimenté en carburant. Des vrilles d'air primaire 26 et d'air secondaire 28 sont disposées de façon à alimenter radialement en air le système d'injection. Un venturi 30 disposé dans l'axe de l'injecteur de carburant 24, entre les vrilles primaire et secondaire, favorise la pulvérisation du carburant en fines gouttelettes. Des trous de ventilation 32 qui débouchent tout autour et à proximité du nez de l'injecteur 24 permettent de limiter, voire d'éliminer, tout risque de cokéfaction au niveau de ce nez.

L'ensemble des systèmes d'injection de la tête pilote peut en outre être muni d'un carénage typiquement formé de deux casquettes 34a et 34b. Ce carénage permet de minimiser les pertes de charge de l'air de contournement de la tête pilote et de garantir une bonne alimentation du fond de chambre de la tête décollage.

On notera que la chambre de combustion peut être réalisée en matériau composite à matrice céramique (CMC) qui, de par sa tenue aux hautes températures, autorise une économie substantielle en débit d'air de refroidissement.

Une chambre de combustion à double tête étagée équipée de systèmes d'injection conformément à l'invention peut fonctionner selon les modes suivants :
- mode ralenti (ou mode N/0) : l'injection de carburant s'effectue uniquement sur la tête pilote équipée des N systèmes d'injection de perméabilité PA. Ce mode est plus particulièrement destiné à l'allumage et au fonctionnement du moteur au voisinage du ralenti ;
- mode « plein gaz » (PG ou mode N/2N) : l'injection de carburant est répartie sur l'ensemble des systèmes d'injection avec possibilité de moduler la répartition de carburant entre les têtes pilote et décollage. Ce mode est destiné à couvrir l'essentiel de la plage de fonctionnement de la chambre et offre les meilleures performances en termes de température, de rendement et de réduction d'émissions polluantes.
- mode de combustion sectorisée (sector-burning) (SB ou mode N/N) : l'alimentation en carburant est réalisée par tous les systèmes d'injection de la tête pilote, et, en général, par un système d'injection sur deux pour la tête décollage. Ce mode de fonctionnement facilite les commutations entre les têtes pilote et décollage, en particulier lorsque les perméabilités des fonds de chambre sont élevées.

La disposition des systèmes d'injection permet d'obtenir une plage de fonctionnement de la chambre de combustion sensiblement étendue, et des performances d'allumage et de stabilité équivalentes voire améliorées par rapport aux chambres classiques. De plus, la transition entre les modes SB et PG peut s'effectuer à bas régime. En effet, les injecteurs de décollage ont tous même perméabilité individuelle de sorte que le passage du mode SB (N/N) à PG (N/2N) est plus aisé que dans le cas du document FR 2 727 193 cité en tête de la description où les n injecteurs de décollage supplémentaires ont une perméabilité globale bien supérieure à celle des n premiers.

Le nombre de systèmes d'injection de la tête pilote (à savoir N) sera optimisé de façon à concilier les performances d'allumage / stabilité et de propagation de flamme tout en autorisant l'implantation de 2N systèmes d'injection en tête décollage. A titre indicatif, on pourra par exemple équiper la tête pilote de 16 systèmes d'injection, et la tête décollage de 32 systèmes d'injection.

## Revendications

1. Chambre de combustion (1) annulaire étagée de turbine à gaz d'un moteur d'avion, comprenant une tête pilote (12) comportant plusieurs systèmes d'injection (16) répartis sur un fond de chambre (8) de tête pilote reliant une paroi longitudinale interne (4) de la chambre à une paroi longitudinale externe (6) de la tête pilote, et une tête décollage (14) radialement et axialement décalée de la tête pilote (12) comportant plusieurs systèmes d'injection (18) répartis sur un fond de chambre (10) de tête décollage reliant la paroi longitudinale externe (6) de la tête pilote à une paroi longitudinale externe (2) de la tête décollage, la tête pilote (12) comportant au moins N systèmes d'injection (16) sensiblement identiques de perméabilité globale PA, adaptés à l'allumage et aux régimes voisins du ralenti, et la tête décollage (14) comportant au moins 2N systèmes d'injection (18) sensiblement identiques de perméabilité globale PB, PB étant supérieure ou égale à PA, la chambre étant **caractérisée en ce que** la perméabilité PA est comprise entre 10 % et 40 % du débit d'air total qui entre dans la chambre et la perméabilité PB est comprise entre 30 % et 70 % du débit d'air total qui entre dans la chambre.

2. Chambre selon la revendication 1, **caractérisée en ce que** la perméabilité PA est comprise entre 17 % et 21 % du débit d'air total qui entre dans la chambre.

3. Chambre selon l'une des revendications 1 et 2, **caractérisée en ce que** la perméabilité PB est comprise entre 36 % et 45 % du débit d'air total qui entre dans la chambre.

4. Chambre selon l'une quelconque des revendications précédentes, **caractérisée en ce qu**'elle comporte en outre une pluralité d'orifices de dilution externes (20) s'ouvrant au moins dans la paroi longitudinale externe (2) de la tête décollage.

5. Chambre selon la revendication 4, **caractérisée en ce qu'**elle comporte au moins une rangée de 2N orifices de dilution externes (20) débouchant sensiblement perpendiculairement à la paroi longitudinale externe (2) de la tête décollage.

6. Chambre selon l'une quelconque des revendications 4 et 5, **caractérisée en ce que** le débit d'air entrant par les orifices de dilution externes compris entre 4 % et 10 % du débit d'air total qui entre dans ia chambre.

7. Chambre selon l'une quelconque des revendications précédentes, **caractérisée en ce qu**'elle comporte une pluralité d'orifices de dilution internes (22) s'ouvrant dans la paroi longitudinale interne (4) de la chambre.

8. Chambre selon la revendication 7, **caractérisée en ce que** le débit d'air entrant par les orifices de dilution internes est compris entre 2 % et 8 % du débit d'air total qui entre dans la chambre.

9. Chambre selon l'une quelconque des revendications précédentes, **caractérisée en ce que** les systèmes d'injection (16, 18) de la tête pilote (12) et de la tête décollage (14) sont disposés sensiblement en quinconce.

10. Chambre selon l'une quelconque des revendications précédentes, **caractérisée en ce que** les axes des systèmes d'injection (16, 18) de la tête pilote (12) et de la tête décollage (14) sont dirigés vers une même zone annulaire d'évacuation des gaz issus de la combustion.

11. Chambre selon l'une quelconque des revendications précédentes, **caractérisée en ce que** les fonds de chambre (8, 10) des têtes pilote et décollage ont des parois perpendiculaires à l'axe du moteur.

12. Chambre selon l'une quelconque des revendications 1 à 10, **caractérisée en ce que** les fonds de chambre (8, 10) des têtes pilote et décollage ont des parois de forme tronconique.

13. Chambre selon l'une quelconque des revendications précédentes, **caractérisée en ce que** les systèmes d'injection d'air (16, 18) des têtes pilote et décollage comportent notamment chacun un injecteur de carburant (24), une vrille d'air primaire (26) et une vrille d'air secondaire (28) alimentées radialement, un venturi (30) situé dans l'axe de l'injecteur, entre les vrilles d'air primaire et secondaire, pour favoriser la pulvérisation du carburant en fines gouttelettes, et des trous de ventilation (32) débouchant à proximité d'un nez de l'injecteur.

14. Chambre selon la revendication 13, **caractérisée en ce que** l'ensemble des systèmes d'injection d'air de la tête pilote est muni d'un carénage (34a, 34b) de façon à minimiser les pertes de charge de l'air de contournement de la tête pilote.

## Claims

1. An offset annular combustion chamber (1) for an airplane engine gas turbine, the chamber comprising a pilot head (12) having a plurality of nozzle systems (16) distributed on a pilot head chamber end wall (8) interconnecting an inner longitudinally-extending side wall (4) of the chamber to a pilot head outer longitudinally-extending side wall (6), and a take-off head (14) that is radially and axially offset from the pilot head (12) and comprising a plurality of nozzle systems (18) distributed on a take-off head chamber end wall (10) interconnecting the pilot head outer longitudinally-extending side wall (6) and a take-off head outer longitudinally-extending side wall (2), the pilot head (12) having at least N substantially identical nozzle systems (16) with overall permeability PA adapted to lighting and to speeds close to idling, and the take-off head (14) having at least 2N substantially identical nozzle systems (18) of overall permeability PB, where PB is greater than or equal to PA, the combustion chamber being **characterised in that** the permeability PA lies in the range 10% to 40% of the total air flow rate penetrating into the chamber and the permeability PB lies in the range 30% to 70% of the total air flow rate penetrating into the chamber.

2. A chamber according to claim 1, **characterised in that** the permeability PA lies in the range 17% to 21% of the total air flow rate penetrating into the chamber.

3. A chamber according to claim 1 or claim 2, **characterised in that** the permeability PB lies in the range 36% to 45% of the total air flow rate penetrating into the chamber.

4. A chamber according to any preceding claim, **characterised in that** it further comprises a plurality of external dilution orifices (20) opening out at least through the outer longitudinally-extending side wall (2) of the take-off head.

5. A chamber according to claim 4, **characterised in that** it has at least one row of 2N outer dilution orifices (20) opening out substantially perpendicularly to the outer longitudinally-extending side wall (2) of the take-off head.

6. A chamber according to claim 4 or claim 5, **characterised in that** the air flow rate penetrating via the outer dilution orifices lies in the range 4% to 10% of the total air flow rate penetrating into the chamber.

7. A chamber according to any preceding claim, **characterised in that** it has a plurality of inner dilution orifices (22) opening out through the inner longitudinally-extending side wall (4) of the chamber.

8. A chamber according to claim 7, **characterised in that** the air flow rate penetrating via the inner dilution orifices lies in the range 2% to 8% of the total air flow rate penetrating into the chamber.

9. A chamber according to any preceding claim, **characterised in that** the nozzle systems (16, 18) of the pilot head (12) and of the take-off head (14) are disposed substantially in a staggered configuration.

10. A chamber according to any preceding claim, **characterised in that** the axes of the nozzle systems (16, 18) of the pilot head (12) and of the take-off head (14) are directed towards a common annular zone for exhausting the gases generated by combustion.

11. A chamber according to any preceding claim, **characterised in that** the chamber end walls (8, 10) of the pilot and take-off heads are walls extending perpendicularly to the axis of the engine.

12. A chamber according to any one of claims 1 to 10, **characterised in that** the chamber end walls (8, 10) of the pilot and take-off heads are walls of frustoconical shape.

13. A chamber according to any preceding claim, **characterised in that** each nozzle system (16, 18) of the pilot and take-off heads comprises a fuel nozzle (24), a primary air swirler (26) and a secondary air swirler (28) that are fed radially, a Venturi (30) situated on the axis of the nozzle between the primary and secondary air swirlers in order to encourage breaking up of the fuel into fine droplets, and ventilation holes (32) opening out close to a tip of the nozzle.

14. A chamber according to claim 13, **characterised in that** the set of pilot head nozzle systems is provided with fairing (34a, 34b) so as to minimize head losses in the air that flows round the pilot head.

## Patentansprüche

1. Gestufte Ringbrennkammer (1) einer Gasturbine eines Flugzeugtriebwerks, umfassend einen Steuerkopf (12) mit mehreren Einspritzsystemen (16), die an einem Steuerkopf-Kammerboden (8), welcher eine Innenlängswand (4) der Kammer mit einer Außenlängswand (6) des Steuerkopfes verbindet, verteilt sind, sowie einen Startkopf (14), der radial und axial zu dem Steuerkopf (12) versetzt ist und mehrere Einspritzsysteme (18) aufweist, die an einem Startkopf-Kammerboden (10), welcher die Außenlängswand (6) des Steuerkopfes mit einer Außenlängswand (2) des Startkopfes verbindet, verteilt sind, wobei der Steuerkopf (12) wenigstens N im wesentlichen identische Einspritzsysteme (16) mit einer Gesamtdurchlässigkeit PA aufweist, die für die Zündung und die benachbarten Leerlaufdrehzahlen geeignet sind, und wobei der Startkopf (14) wenigstens 2N im wesentlichen identische Einspritzsysteme (18) mit einer Gesamtdurchlässigkeit PB aufweist, wobei PB größer als oder gleich PA ist, wobei die Kammer **dadurch gekennzeichnet ist, daß** die Durchlässigkeit PA zwischen 10 % und 40 % der in die Kammer eintretenden gesamten Luftmenge ist und die Durchlässigkeit PB zwischen 30 % und 70 % der in die Kammer eintretenden gesamten Luftmenge ist.

2. Kammer nach Anspruch 1, **dadurch gekennzeichnet, daß** die Durchlässigkeit PA zwischen 17 % und 21 % der in die Kammer eintretenden gesamten Luftmenge ist.

3. Kammer nach einem der Ansprüche 1 und 2, **dadurch gekennzeichnet, daß** die Durchlässigkeit PB zwischen 36 % und 45 % der in die Kammer eintretenden gesamten Luftmenge ist.

4. Kammer nach einem der vorhergehenden Ansprüche, **dadurch gekennzeichnet, daß** sie ferner eine Vielzahl von sich wenigstens in der Außenlängswand (2) des Startkopfes öffnenden äußeren Verdünnungsöffnungen (20) umfaßt.

5. Kammer nach Anspruch 4, **dadurch gekennzeichnet, daß** sie wenigstens eine Reihe von 2N äußeren Verdünnungsöffnungen (20) aufweist, die im wesentlichen senkrecht zur Außenlängswand (2) des Startkopfes einmünden.

6. Kammer nach einem der Ansprüche 4 und 5, **dadurch gekennzeichnet, daß** die über die äußeren Verdünnungsöffnungen eintretende Luftmenge zwischen 4 % und 10 % der in die Kammer eintretenden gesamten Luftmenge beträgt.

7. Kammer nach einem der vorhergehenden Ansprüche, **dadurch gekennzeichnet, daß** sie eine Vielzahl von sich in der Innenlängswand (4) der Kammer öffnenden inneren Verdünnungsöffnungen (22) aufweist.

8. Kammer nach Anspruch 7, **dadurch gekennzeichnet, daß** die über die inneren Verdünnungsöffnungen eintretende Luftmenge zwischen 2 % und 8 % der in die Kammer eintretenden gesamten Luftmenge beträgt.

9. Kammer nach einem der vorhergehenden Ansprüche, **dadurch gekennzeichnet, daß** die Einspritzsysteme (16, 18) des Steuerkopfes (12) und des Startkopfes (14) im wesentlichen versetzt angeordnet sind.

10. Kammer nach einem der vorhergehenden Ansprüche, **dadurch gekennzeichnet, daß** die Achsen der Einspritzsysteme (16, 18) des Steuerkopfes (12) und des Startkopfes (14) in Richtung eines gleichen ringförmigen Bereichs zum Abführen der aus der Verbrennung hervorgehenden Gase gerichtet sind.

11. Kammer nach einem der vorhergehenden Ansprüche, **dadurch gekennzeichnet, daß** die Kammerböden (8, 10) des Steuer- und des Startkopfes zur Achse des Triebwerks senkrecht verlaufende Wände aufweisen.

12. Kammer nach einem der Ansprüche 1 bis 10, **dadurch gekennzeichnet, daß** die Kammerböden (8, 10) des Steuer- und des Startkopfes kegelstumpfförmige Wände haben.

13. Kammer nach einem der vorhergehenden Ansprüche, **dadurch gekennzeichnet, daß** die Lufteinspritzsysteme (16, 18) des Steuer- und des Startkopfes insbesondere jeweils eine Kraftstoffeinspritzdüse (24), eine primäre Luftverwirbelung (26) und eine sekundäre Luftverwirbelung (28), die radial beaufschlagt werden, eine in der Achse der Einspritzdüse, zwischen der primären und der sekundären Luftverwirbelung gelegene Venturidüse (30), um das Zerstäuben des Kraftstoffs in feine Tröpfchen zu begünstigen, sowie Lüftungslöcher (32), die in der Nähe einer Nase der Einspritzdüse einmünden, umfassen.

14. Kammer nach Anspruch 13, **dadurch gekennzeichnet, daß** die Gesamtheit der Lufteinspritzsysteme des Steuerkopfes mit einer Verkleidung (34a, 34b) versehen ist, so daß die Druckverluste der Umgehungsluft des Steuerkopfes minimiert werden.
